(19) Europäisches Patentamt
European Patent Office
Office européen des brevets

(11) **EP 3 058 322 B1**

(12) **EUROPEAN PATENT SPECIFICATION**

(45) Date of publication and mention
of the grant of the patent:
**09.05.2018 Bulletin 2018/19**

(51) Int Cl.:
*G01G 19/42* (2006.01)　　　*G07D 7/182* (2016.01)
*G01G 23/01* (2006.01)　　　*G07D 7/181* (2016.01)

(21) Application number: **14796841.6**

(22) Date of filing: **13.10.2014**

(86) International application number:
**PCT/GB2014/053069**

(87) International publication number:
**WO 2015/055989 (23.04.2015 Gazette 2015/16)**

(54) **IMPROVEMENTS IN OR RELATING TO COUNTING BY WEIGHT COUNTING SYSTEMS**

VERBESSERUNGEN AN ODER IM ZUSAMMENHANG MIT ZÄHLEN DURCH GEWICHTZÄHLSYSTEME

PERFECTIONNEMENTS APPORTÉS OU SE RAPPORTANT À DES SYSTÈMES DE COMPTAGE À COMPTAGE PAR PESÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.10.2013　GB 201318219**

(43) Date of publication of application:
**24.08.2016　Bulletin 2016/34**

(73) Proprietor: **Cashmaster International Limited Rosyth, Fife KY11 2QQ (GB)**

(72) Inventors:
• **MCPHAIL, Duncan**
**Kirkcaldy**
**Fife KY1 3DD (GB)**
• **HAMILTON, William Wright**
**Rosyth**
**Fife KY1 2LT (GB)**
• **LLOYD, Martin**
**Glenrothes**
**Fife KY7 4TR (GB)**

(74) Representative: **Hutchison, Craig McGregor Lawrie IP Limited**
**The Hub**
**Pacific Quay**
**Pacific Drive**
**Glasgow G51 1EA (GB)**

(56) References cited:
**EP-A2- 0 091 274　US-A- 4 157 738**
**US-A- 4 629 016**

**Description**

Field

This invention relates to a method to automatically adjust the maximum number of items (Slice Limit) to be applied to a counting by weight cash counting process at one time to ensure the maximum possible accumulated tolerance cannot result in an error and that optimum efficiency is maintained.

Background

Within industries where cash handling processes occur, it is common practice to use cash counting equipment to monitor cash flow. One method of doing this is by the use of counting by weight cash counting device(s) to count banknotes, coins and other cash representative items such as tokens or vouchers. Such device(s) comprise an extremely accurate, micro-controller based electronic scale, designed specifically for the purpose of counting cash, controlled by software designed to resolve the measured weight for each denomination being processed into a number of items of that denomination. The software process used to implement this technology in ideal conditions simply consists of weighing an unknown number of identical items, then dividing the weight obtained by the weight of a single item to determine the number of items weighed.

In practice any item that is produced repetitively (such as banknotes) will have a weight tolerance, small variations between one produced item and the next, that will affect the maximum number of items that may be counted without the risk of a counting error caused by these tolerances accumulating. In some situations this error may be ignored e.g. if very low value items are being counted an error of 1 or 2 pieces may be negligible and considered acceptable, or it may be impossible to ever experience this error e.g. the number of pieces required, if each item weighs the minimum within its tolerance range, for the total weight to indicate an error of -1 piece produces a total weight beyond the range of the weighing device. However, in the situation where low weight, high value objects (such as banknotes) are counted by weight, it is necessary to apply a slice limit - a maximum number of items that can be applied to the weighing device (such as a counting by weight cash counting device) at one time to ensure the maximum possible accumulated tolerance cannot result in an error. The use of slice limits in conjunction with other methods such as tapered weight acceptance bands and note weight learning allow for extremely accurate counting of banknotes using counting by weight cash counting device(s).

A problem exists in the case of counting banknotes by weight when there is a weight variation caused by differing note issues being in circulation simultaneously or circulated notes physical condition causes variance between notes i.e. brand new versus used, the note weight learning algorithm will adjust its expected weight of a single banknote according to the average weight of the notes being counted but the weight range of the notes in circulation from the lowest weight of the lightest note to the highest weight of the heaviest note will not be recognised. In order to continue counting accurately and efficiently, the slice limit must be adjusted according to the weight range of the banknotes being processed. As slice limits are currently normally determined by careful and accurate manual weighing of many samples of a denomination to build up a statistical profile of note weight variations, the task of determining a new slice limit takes considerable time and is only relevant to that point in time. Furthermore, this determination is normally triggered by experiencing a higher than acceptable number of count errors but, not necessarily by an improving weight range that would allow for a larger and more efficient slice limit. The slice limit should in fact change over time to maintain accuracy and efficiency as any series notes are added to or removed from circulation causing a change in the data set.

Means for counting by weighing are for example known from patent documents EP0091274 A2 or US4629016A.

The present invention aims to address these problems by providing an automatic and continuous method of determining and applying the slice limit for optimum accuracy and efficiency of counting. The present invention is defined by independent method claim 1 and independent apparatus claim 14. In the present invention the term "slice limit" is considered to mean the maximum number of items that may be applied to a counting by weight counting system at one time to ensure the maximum possible accumulated tolerance cannot result in an error.
The counting by weight counting system may be a counting by weight cash counting system.
The items being counted may be any item that is produced repetitively. The items being counted may be cash, i.e. bank notes, bank coins or any other cash representative items such as tokens or vouchers.

The one or more properties of the items that may be provided to the counting by weight counting system may be an item identifier, item value, item monetary value, code, item currency, or the like. If the item is cash the denomination of the bank note or bank coin may be provided to the counting by weight counting system.
The method may comprise the additional step of removing one or more items from the counting by weight counting system before the total number of said items is determined if the total measured weight of the items exceeds the current slice limit.

The method may comprise the additional step of removing one or more items from the counting by weight counting system before the total number of said items is determined if the total measured weight is out with a predetermined tolerance band for the determined total number of items.

The method may comprise the additional step of displaying the total number of items added to the counting by weight counting system.

The method may comprise the additional step of recording or storing the total number of items added to the counting by weight counting system. The method may comprise the additional step of recording or storing the measured weight of the number of items added to the counting by weight counting system.

The determination of the total number of said items added to said counting by weight counting system may be based on an average predetermined weight of one of said items.

The determination of the total number of said items added to said counting by weight counting system may be based on a plurality of predetermined weights of one of said items. The determination of the total number of said items added to said counting by weight counting system may be based on an average of a plurality of predetermined weights of one of said items.

Said plurality of predetermined weights of one of said items may be representative of the weight of one of said items over a period of time. Said plurality of predetermined weights of one of said items may be representative of the average weight of one of said items over a period of time.

Said plurality of predetermined weights of one of said items may be representative of the historical weight of one of said items. Said plurality of predetermined weights of one of said items may be representative of the historical average weight of one of said items.

Said plurality of predetermined weights may be stored in the counting by weight counting system. Said plurality of predetermined weights may be stored on computer readable media in the counting by weight counting system.

Said plurality of predetermined weights may be stored in a buffer. The buffer may be a circular buffer. The buffer may be readable by a computer.

The method may comprise the additional step of adding the determined average weight of said items added to said counting by weight counting system to the plurality of predetermined weights of one of said items. The method may comprise the additional step of adding the determined average weight of said items added to said counting by weight counting system to the stored plurality of predetermined weights of one of said items. The method may comprise the additional step of adding the determined average weight of said items added to said counting by weight counting system to the circular buffer of stored predetermined weights of one of said items.

The step of determining the mean value of said at least one predetermined weight of one of said items and said average weight of said items added to said counting by weight counting system may use the formula:

$$\mu = \frac{1}{N} \sum_{i=1}^{N} W_i$$

where:

$\mu$ = the average weight of said items added to the counting by weight counting system (the current (calculated) expected note weight (mean of item learned weights in circular buffer 1 (21)));
$Wi$ = the at least one predetermined weight of one of said items (note weights obtained from previous measurements (item learned weights in circular buffer 1 (21)));
$N$ = the number of predetermined weights of one of said items (the number of previous measurements over which the average is calculated (number of records in circular buffer 1 (21))); and
$i$ = index of previous measurements.

The step of determining the standard deviation of said at least one predetermined weight of one of said items and said average weight of said items added to said counting by weight counting system may use the formula:

$$\sigma_W = \sqrt{\frac{1}{N} \sum_{i=1}^{N} (W_i - \mu)^2}$$

where:

$\sigma_W$ = the standard deviation of said at least one predetermined weight of one of said items and said average weight of said items added to said counting by weight counting system (the current (calculated) standard deviation based on item learned weights in circular buffer 1 (21));

$W_i$ = the at least one predetermined weight of one of said items (note weights obtained from previous measurements (item learned weights in circular buffer 1 (21)));

$N$ = the number of predetermined weights of one of said items (the number of previous measurements (number of records in circular buffer 1 (21))); i = index of previous measurements; and

$\mu$ = the average weight of said items added to the counting by weight counting system (the current expected note weight (the result from Calculation at step 2)))

The step of determining the new slice limit of the counting by weight counting system may use the formula:

$$ SL_n = 1 + INT\left( SL_o \cdot e^{-k \cdot \frac{\sigma_W}{\mu}} \right) $$

where:

$SL_n$ = the determined new slice limit (the calculated new slice limit);

$SL_o$ = the current slice limit (the default slice limit (from register $SL_o$ (110)));

$\sigma_W$ = the standard deviation of said at least one predetermined weight of one of said items and said average weight of said items added to said counting by weight counting system (the current standard deviation (the result from Calculation at step 3)));

$\mu$ = the average weight of said items added to the counting by weight counting system (the current expected note weight (the result from Calculation at step 2))); and

$k$ = sensitivity factor.

The sensitivity factor may be 50. The sensitivity factor may be between 0 and 100.

The counting by weight counting system may be configured to operate with a plurality of different items. The plurality of different items may be different denominations of bank notes, bank coins etc.

The determined weights, mean weights, standard deviations of mean weights and slice limits may be stored for each type of item counted by the counting by weight counting system.

The determined weights, mean weights, standard deviations of mean weights and slice limits may be stored on computer readable media in the counting by weight counting system.

According to a second aspect of the present invention there is provided a counting by weight counting apparatus comprising:

a property input module capable of providing said apparatus with one or more properties of an item to be counted;

a weight measuring module capable of measuring the weight of a total number of said items added to said counting by weight counting apparatus;

a total item number determination module capable of determining the total number of said items added to said counting by weight counting apparatus, said determination being based on at least one predetermined weight of one of said items;

an average weight determination module capable of determining the average weight of said items added to said counting by weight counting apparatus;

a mean value determination module capable of determining the mean value of said at least one predetermined weight of one of said items and said average weight of said items added to said counting by weight counting apparatus;

a standard deviation module capable of determining the standard deviation of said at least one predetermined weight of one of said items and said average weight of said items added to said counting by weight counting apparatus; and

a slice limit determination module capable of determining a new slice limit of the counting by weight counting apparatus, said determination being based on the mean value of said at least one predetermined weight of one of said items and said average weight of said items added to said counting by weight counting apparatus, and the standard deviation of said at least one predetermined weight of one of said items and said average weight of said items added to said counting by weight counting apparatus.

According to a third aspect of the present invention there is provided a computer program product encoded with instructions that when run on a computer of a counting by weight counting apparatus, cause the counting by weight counting apparatus to receive input data and information and perform a method of adjusting the slice limit thereof, the method comprising the steps of:

> providing said apparatus with one or more properties of an item to be counted;
> measuring the weight of the total number of said items added to said counting by weight counting system;
> determining the total number of said items added to said counting by weight counting system, said determination being based on at least one predetermined weight of one of said items;
> determining the average weight of said items added to said counting by weight counting system;
> determining the mean value of said at least one predetermined weight of one of said items and said average weight of said items added to said counting by weight counting system;
> determining the standard deviation of said at least one predetermined weight of one of said items and said average weight of said items added to said counting by weight counting system; and
> determining a new slice limit of the counting by weight counting system, said determination being based on the mean value of said at least one predetermined weight of one of said items and said average weight of said items added to said counting by weight counting system, and the standard deviation of said at least one predetermined weight of one of said items and said average weight of said items added to said counting by weight counting system.

The computer program product may be stored on or transmitted over as one or more instructions or code on a computer-readable medium. Computer-readable media includes both computer storage media and communication media including any medium that facilitates transfer of a computer program from one place to another. A storage media may be any available media that can be accessed by a computer. By way of example, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Also, any connection is properly termed a computer-readable medium. For example, if the software is transmitted from a website server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk and blu-ray disc where disks usually reproduce data magnetically, while discs reproduce data optically with lasers. Combinations of the above should also be included within the scope of computer-readable media. The instructions or code associated with a computer-readable medium of the computer program product may be executed by a computer, e.g., by one or more processors, such as one or more digital signal processors (DSPs), general purpose microprocessors, ASICs, FPGAs, or other equivalent integrated or discrete logic circuitry.

According to further aspects of the invention there is provided a counting by weight cash counting process (200) for resolving the measured weight derived from a counting by weight cash counting device, for each denomination being processed, into a number of items of that denomination, said resolution being susceptible to changes in the weight tolerance range within the total population of the type of items to be counted, the process comprising the stages:

selecting the currency and denomination of items to be counted;

calculating the number of items from the applied weight;

checking if the calculated number of items is within the current slice limit for the currency and denomination being processed. If calculated number of items is greater than the slice limit, prompting operator to remove some items from the counting by weight cash counting device;

checking if the measured weight is within the tolerance bands for the calculated number of items. If measured weight is outside the tolerance bands, prompting operator to remove some items from the counting by weight cash counting device;

display the calculated number of items;

record the calculated number of items and applied weight;

check if item weight learning is enabled. If enabled, calculate and update item learned weight for processed currency and denomination; and

if item weight learning is enabled, check if automatic slice limit adjustment (100) is also enabled. If both item weight learning and automatic slice limit adjustment (100) are enabled, calculate and update slice limit for processed currency and denomination.

The method for automatic slice limit adjustment (100), the method comprising the steps:

step 1 (20) - storing calculated item learned weight to circular buffer 1 (21);

step 2 (30) - calculating the mean of learned weights in circular buffer 1 (21);

step 3 (40) - calculating standard deviation from learned weights in circular buffer 1 (21);

step 4 (50) - calculating new slice limit for current currency and denomination; and

step 5 (70) - storing new slice limit to register $SL_n$ (120).

Steps 2, 3 and 4 of the method for automatic slice limit adjustment (100) comprise a slice limit determination algorithm (60) for determination of adjustment required to slice limit for the relevant currency and denomination.
The slice limit determination algorithm (60) comprises the steps of:

calculating the mean of learned weights in circular buffer 1 (21) using the formula:

$$\mu = \frac{1}{N} \sum_{i=1}^{N} W_i$$

where:

$\mu$ = the current (calculated) expected note weight (mean of item learned weights in circular buffer 1 (21))
$W_i$ = note weights obtained from previous measurements (item learned weights in circular buffer 1 (21))
$N$ = the number of previous measurements over which the average is calculated (number of records in circular buffer 1 (21))
$i$ = index of previous measurements;

calculating standard deviation from learned weights in circular buffer 1 (21) using the formula:

$$\sigma_W = \sqrt{\frac{1}{N} \sum_{i=1}^{N} (W_i - \mu)^2}$$

where:

$\sigma_W$ = the current (calculated) standard deviation based on item learned weights in circular buffer 1 (21)
$W_i$ = note weights obtained from previous measurements (item learned weights in circular buffer 1 (21))
$N$ = the number of previous measurements (number of records in circular buffer 1 (21))
$i$ = index of previous measurements
$\mu$ = the current expected note weight (the result from calculation (30) of mean of learned weights in circular buffer 1 (21)); and

calculating new slice limit for current currency and denomination using the formula:

$$SL_n = 1 + INT\left( SL_o \cdot e^{-k \cdot \frac{\sigma_W}{\mu}} \right)$$

where:

$SL_n$ = the calculated new slice limit

$SL_o$ = the default slice limit (from register $SL_o$ (110))

$\sigma_W$ = the current standard deviation (the result from the calculation (40) of standard deviation from learned weights in circular buffer 1 (21)

$\mu$ = the current expected note weight (the result from the calculation (30) of mean of learned weights in circular buffer 1 (21))

$k$ = sensitivity factor.

The circular buffer 1 (21) possesses a capacity to store a pre-set number of records where all records contained in the circular buffer 1 (21) are included in the calculation (30) of the mean of learned weights in circular buffer 1 (21) and in the calculation (40) of standard deviation of learned weights in circular buffer 1 (21).

In an alternative configuration the capacity of circular buffer 1 (21) to store records may be variable and automatically adjustable based on, for instance, the rate of change of learned weight values, such variability enabling the method for automatic slice limit adjustment (100) to respond more quickly to significant changes in the weight tolerance range within the total population of the type of items to be counted.

In another alternative configuration the circular buffer 1 (21) may possess a capacity to store a pre-set number of records but the number of most recent records included in the calculation (30) of the mean of learned weights in circular buffer 1 (21) and in the calculation (40) of standard deviation of learned weights in circular buffer 1 (21) may be variable and automatically adjustable based on, for instance, the rate of change of learned weight values, such variability enabling the method for automatic slice limit adjustment (100) to respond more quickly to significant changes in the weight tolerance range within the total population of the type of items to be counted.

Aspects and embodiments of the invention are set out in the accompanying claims.

In general terms, one embodiment of a first aspect of the invention can provide a method to automatically and continuously adjust the slice limit utilising an automatic slice limit determination algorithm. The calculations involved in the slice limit adjustment method requires data from counting operations to be recorded and historical data to be analysed in order to determine the statistical profile of banknotes being weighed and how this profile is changing over time.

This method is not expected to eliminate all possible errors that may occur with the introduction of a new series of banknotes: As this method will be based on a learning algorithm, time will be required for adjustments to take place over a number of counts before changes to the slice limit become effective - if a large number of new series notes are counted on a weighing device before any learning has taken place, an error will still be possible, but it is expected that situations where this method is used will demonstrate considerable improvement over situations where it is not used.

Similarly, this method is not expected to continuously achieve maximum slice limit and hence, maximum efficiency: As this method will be based on a learning algorithm, time will be required for adjustments to take place over a number of counts before changes to the slice limit become effective, but it is expected that changes will occur much more rapidly than is presently the situation as an improving denomination weight range and reducing frequency of count errors is currently unlikely to prompt a new manual determination of slice limit.

This method also allows the system, rather than an individual, to determine the slice limit. This means that human error can be avoided, and appropriate calibration of the device can be undertaken efficiently by the system itself, rather than manually.

Brief Description of Figures

An embodiment of the invention will now be described, by way of example only, with reference to the following figures, in which:-

- Figure 1 - shows a flow diagram illustrating a typical counting by weight cash counting process for a single denomination;

- Figure 2 - shows a flow diagram illustrating a method of adjusting the slice limit of a counting by weight counting system according to the present invention;

- Figure 3 - shows a flow diagram illustrating a part of the automatic slice adjustment method;

- Figure 4 - shows a chart illustrating typical outputs from P(x) and x [data set, 1000points] formulae;

- Figure 5 - shows a chart illustrating a distribution of old and new series banknotes combined;

- Figure 6 - shows a chart illustrating the equivalent Gaussian distribution P'(x);

- Figure 7 - shows a chart illustrating calculated values of σ and oW simulated with fixed slice limit

- Figure 8 - shows a chart illustrating simulation results - automatic slice limit adjustment turned off; and

- Figure 9 - shows a chart illustrating simulation results - automatic slice limit adjustment turned on.

Detailed Description of Preferred Embodiments of the Invention

Embodiments of the current invention propose an automatic slice limit adjustment method (100) wherein the method is an integral part of the counting by weight cash counting process (200) as employed in counting by weight cash counting device(s). This allows a device(s) to monitor counting operation results, apply the slice limit determination algorithm and automatically adjust the slice limit as required for optimum count accuracy and efficiency. It allows a device(s) to adjust the slice limit after each counting operation as compared to the intermittent, manual determination and application of slice limit adjustments that occur currently.

The following describes one embodiment of the automatic slice limit adjustment method (100) by description and example:

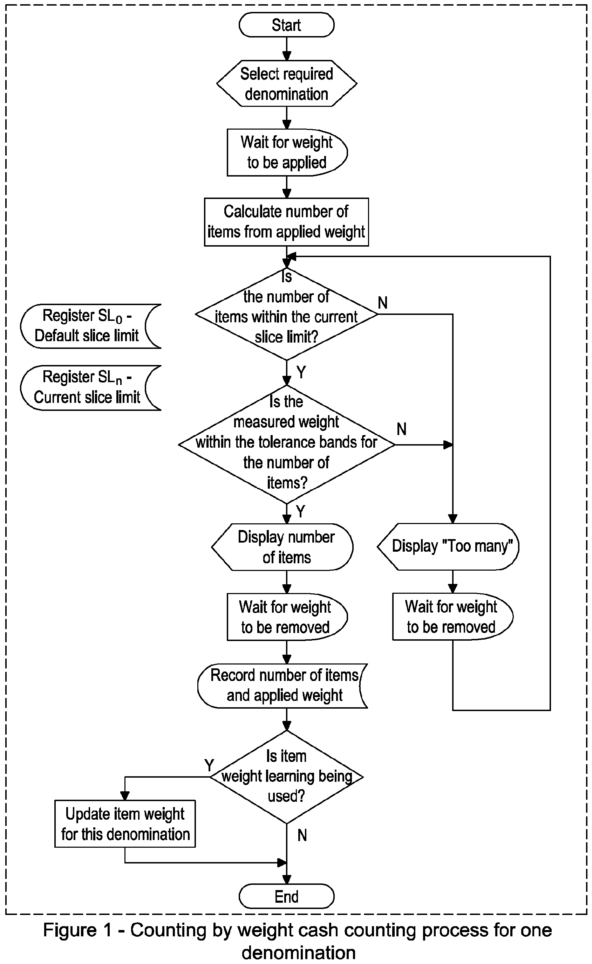

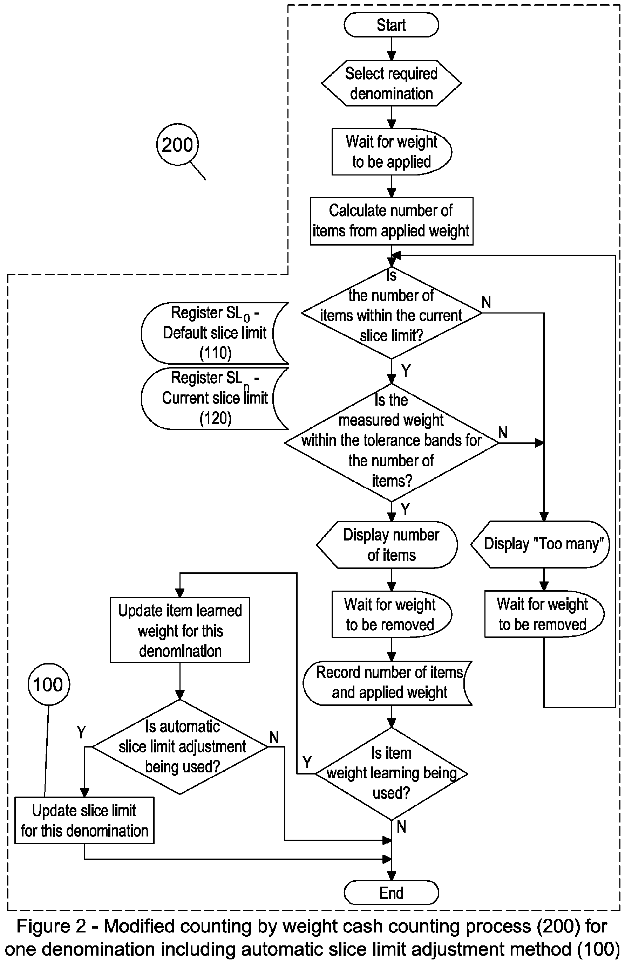

Attention is first drawn to Figure 1, showing one embodiment of a counting by weight cash counting process as currently used. Figure 2, shows one embodiment of a counting by weight cash counting process including an automatic slice adjustment method (100) according to the present invention.

**Automatic Slice Limit Determination Algorithm Simulation:**

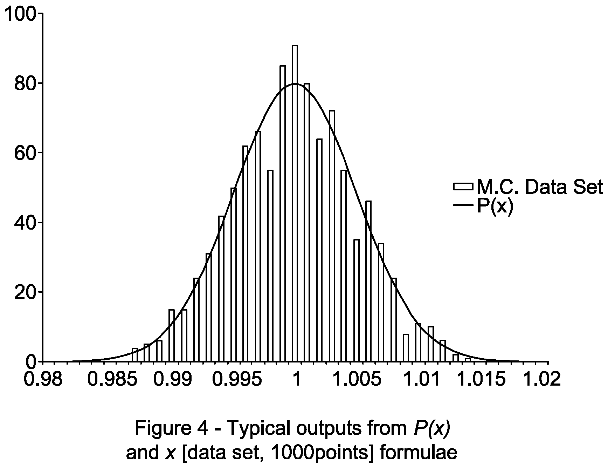

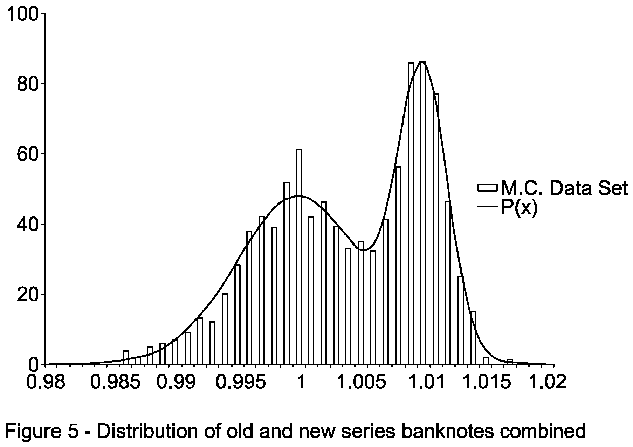

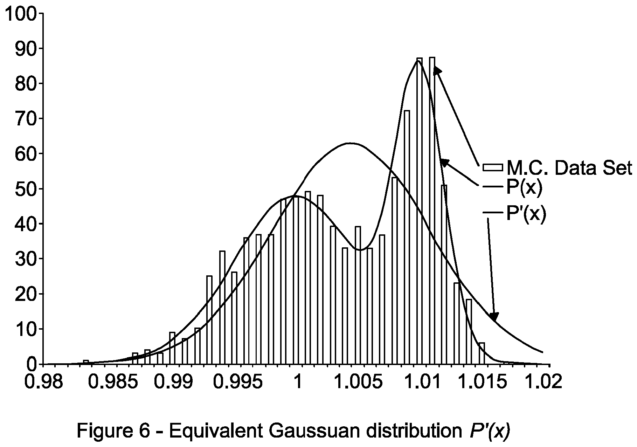

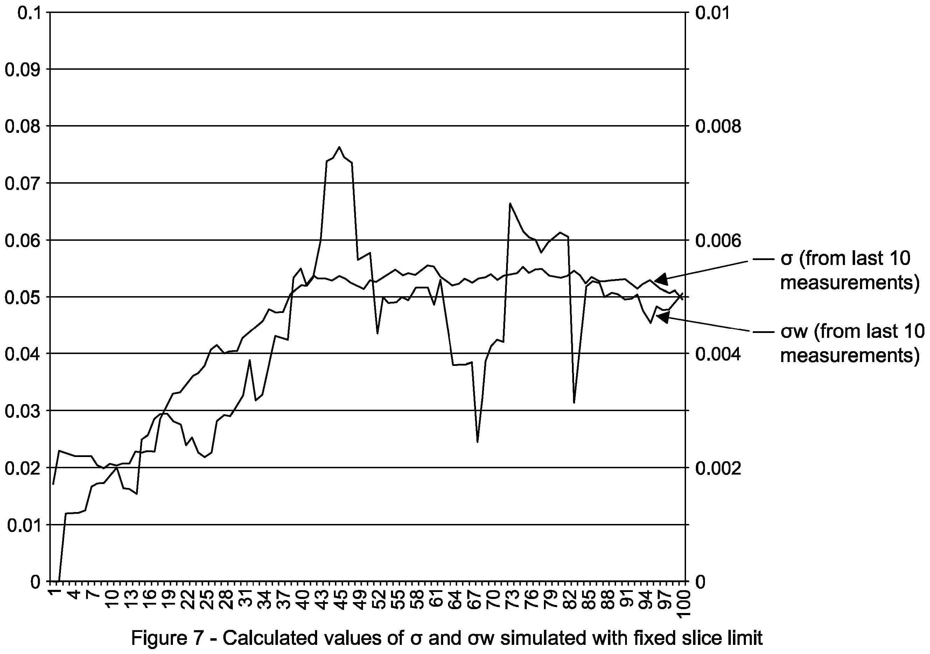

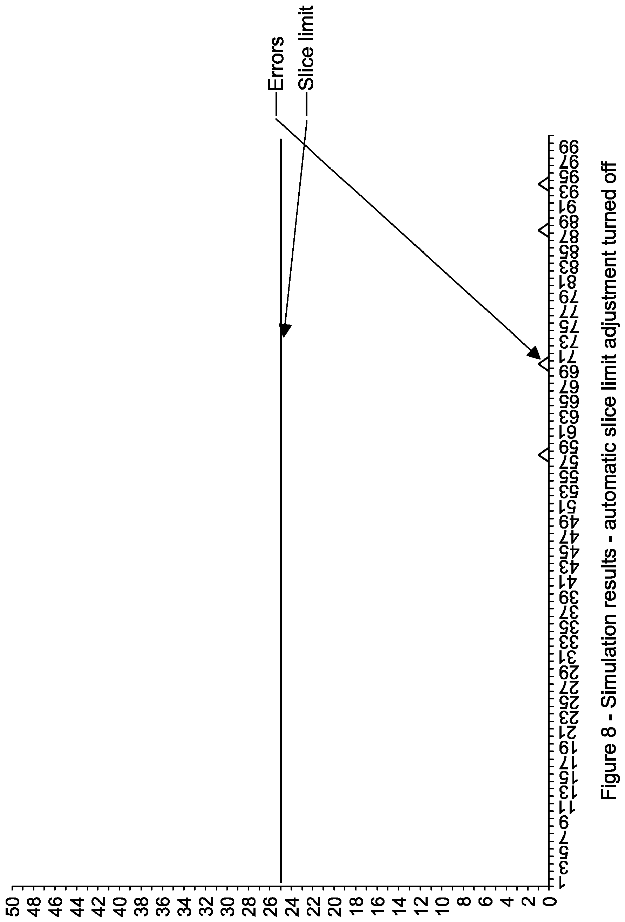

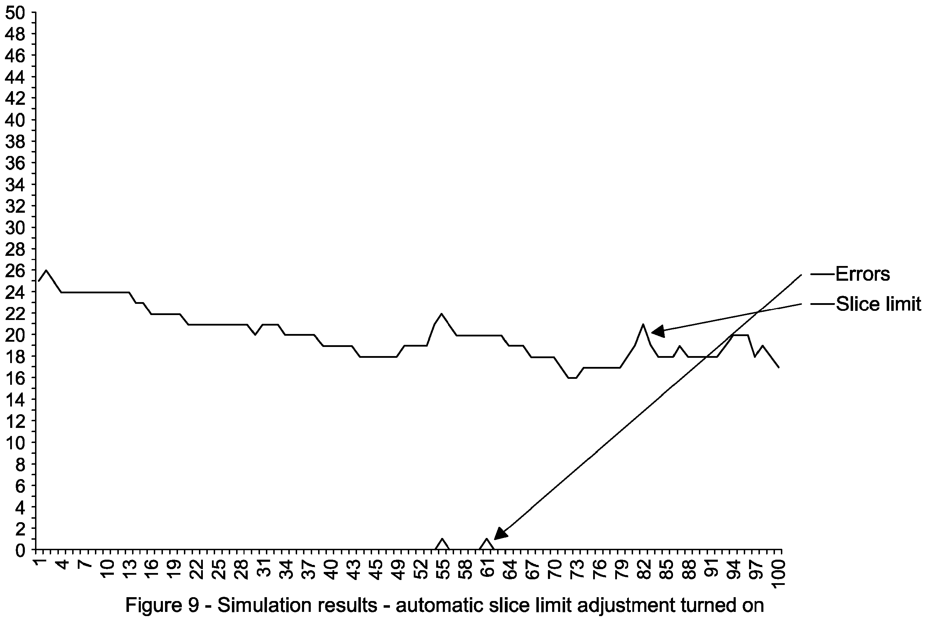

Attention is now drawn to Figure 4, showing typical outputs from P(x) and x [data set, 1000points] formulae. Figure 5 shows Distribution of old and new series banknotes combined. Figure 6 shows Equivalent Gaussian distribution P'(x). Figure 7 shows calculated values of a and oW simulated with fixed slice limit. Figure 8 shows simulation results - automatic slice limit adjustment turned off. Figure 9 shows simulation results - automatic slice limit adjustment turned on.

**Relation between tolerance and standard deviation:**

In order to accurately model the effect of adjusting the slice limit when counting banknotes by weight, it is primarily important to define how the tolerances of these notes are interpreted. If the weight and tolerance for a denomination of banknote is stated as X.XXXXg $\pm$ Y.YYYYg, it is easy to infer that note weights will be evenly and exclusively distributed across this range. This is not the case however as can be understood from the following rationale:

When banknotes are produced, the tolerance will be very tight, producing almost identically sized sheets (within a fraction of a millimeter), each having the same additional features applied (holograms, security thread, photo luminescent ink, varnish etc.). Through the banknotes life, the weight will change through: wear & tear of the varnish breaking and small tears in the paper; oil from human skin and atmospheric moisture absorbed into the note; objects stuck to the surface of the note either intentionally (adhesive tape etc.) or unintentionally. This effectively widens the tolerance of circulated notes, with most remaining close to their original weight, but some varying in weight by a considerable amount.

The result is a statistical distribution in the weight of circulated banknotes closely resembling a Gaussian distribution. There will be small changes because of the nature of these items - a Gaussian distribution would yield a positive probability (albeit very small) that a banknote could have a weight of 50% its original weight when produced (a note that had lost half its mass would have been removed from circulation). Similar extreme cases would also exist in the positive direction. However, as the tolerances of bank notes are usually no more than $\pm5\%$, these errors will be negligible, with a Gaussian distribution model producing results slightly worse than will be observed in practice.

For the purposes of modeling the statistical distribution, it will be assumed that the tolerance limits for a denomination of banknotes correspond to three standard deviations from the mean value (T = $\pm3\sigma$). The probability density function will be described by:

$$P(x) = \frac{1}{\sigma\sqrt{2\pi}} e^{-\frac{1}{2}\left(\frac{x-\mu}{\sigma}\right)^2}$$

where:

x = weight (independent variable)
*P(x)* = probability density function (dependent variable)
$\sigma$ = standard deviation (property of data set)
$\mu$ = mean (property of data set)

When a data set (of weights) is required to be modeled, each data point will be calculated using two random numbers (between 0 and 1) A and B (random numbers re-generated for each new point), with the function:

$$x = \mu + \left(\sqrt{-2 \cdot \ln(A)}\right) \cdot \left(2 \cdot \cos(2 \cdot \pi \cdot B)\right) \cdot \sigma$$

This is a standard formula used to calculate Gaussian distributed data points for the purpose of performing Monte Carlo simulations. Typical outputs from these formulae, are shown in Figure 4 for data set of 1000 points, $\sigma$ = 0.005, $\mu$ =1.000.

**Typical Scenario: Introduction of a new series of banknotes**

The real life problem described now of the case of circulated banknotes when a new series is released, used as an example will also apply to cases where changes in physical condition occur to some banknotes in circulation. In this case the probability density function when all banknotes in circulation is considered will be the superposition of two Gaussian distributions (weighted according to the ratio of old to new banknotes in circulation), each with a different mean and standard deviation. It is most likely that the standard deviation of the new series banknotes will be smaller than the standard deviation of the old series of banknotes as these will not have been subjected to the factors mentioned earlier that would cause weight fluctuations to the same degree as the old series. The probability density function of the old series banknotes and new series banknotes will be described by:

$$P_1(x) = \frac{1}{\sigma_1 \sqrt{2\pi}} e^{-\frac{1}{2}\left(\frac{x-\mu_1}{\sigma_1}\right)^2} \qquad P_2(x) = \frac{1}{\sigma_2 \sqrt{2\pi}} e^{-\frac{1}{2}\left(\frac{x-\mu_2}{\sigma_2}\right)^2}$$

,

where:

x = weight (independent variable)
*P1(x)* = probability density function old series banknotes (dependent variable)
*P2(x)* = probability density function new series banknotes (dependent variable)
$\sigma_1$ = standard deviation old series banknotes (property of data set)
$\sigma_2$ = standard deviation new series banknotes (property of data set)
$\mu_1$ = mean old series banknotes (property of data set)
$\mu_2$ = mean new series banknotes (property of data set)

When combining these functions it is necessary to satisfy the requirement of any probability density function:

$$\int_{-\infty}^{\infty} P(x)dx = 1$$

This is achieved by weighting each of the individual notes probability density functions by a constant before adding them to obtain the overall function:

$$P(x) = k_1 \cdot P_1(x) + k_2 \cdot P_2(x)$$

where:

x = weight (independent variable)
$P(x)$ = probability density function all notes in circulation (dependent variable)
$P_1(x)$ = probability density function old series banknotes (dependent variable)
$P_2(x)$ = probability density function new series banknotes (dependent variable)
$k_1$= ratio of old series banknotes to total banknotes in circulation (constant)
$k_2$= ratio of new series banknotes to total banknotes in circulation (constant)

The properties of $k_1$ and $k_2$ must be such that $k_1 + k_2 = 1$ and $k_1:k_2$ = ratio of old series banknotes in circulation: new series banknotes in circulation.

When generating a data set for the purpose of performing Monte Carlo simulations, the same function is used as before, now modified to calculate data points for either old series data set or new series data set:

$$x_1 = \mu_1 + \left(\sqrt{-2 \cdot \ln(A)}\right) \cdot \left(2\cos(2 \cdot \pi \cdot B)\right) \cdot \sigma_1$$

$$x_2 = \mu_2 + \left(\sqrt{-2 \cdot \ln(A)}\right) \cdot \left(2\cos(2 \cdot \pi \cdot B)\right) \cdot \sigma_2$$

where:

$x_1$= data point calculated for old series banknotes (data set member)
$x_2$= data point calculated for new series banknotes (data set member)

A complete data set of $n$ points should consist of $k_1 \cdot n$ points calculated using $x_1$ and $k_2 \cdot n$ points calculated using $x_2$.

A typical distribution of $P(x) = k_1 \cdot P_1(x) + k_2 \cdot P_2(x)$ and data set of 1000 points for $\sigma_1$ = 0.005, $\mu_1$ =1.000, $k_1$ =0.6, $\sigma_2$ = 0.002, $\mu_2$ =1.010, $k_2$ =0.4 is shown in Figure 5.

**Simplification of double peak back to Gaussian distribution:**

In order to obtain tolerance limits from the double peak distribution that is found when two series of banknotes are in circulation simultaneously, it is necessary to simplify the double peak to a Gaussian distribution that will be representative of the data set containing both types of notes. A mean for this distribution can be found independently of the standard deviations of the constituent distributions:

$$\mu = (k_1 \cdot \mu_1) + (k_2 \cdot \mu_2)$$

The overall standard deviation for the Gaussian distribution is affected by the two original standard deviations, the difference between the two original means and the ratio of the sizes of the two original data sets. This is equivalent to the standard deviations of two non-overlapping sub-populations, which can be calculated as:

$$\sigma = \sqrt{k_1 \cdot \sigma_1^2 + k_2 \cdot \sigma_2^2 + k_1 \cdot k_2 \cdot (\mu_1 - \mu_2)^2}$$

The resulting Gaussian distribution is shown on Figure 6 as $P'(x)$, superimposed over the double peak distribution obtained in Figure 5, using the same parameters. Note that the Monte Carlo simulation set has been re-calculated using new random numbers and will look slightly different to those shown in Figure 5, but as the functions used to generate the data set are the same as before, the data set follows a similar distribution.

Returning to the original definition of T = $\pm 3\sigma$, it is this calculation of $\sigma$ that should be used to determine the tolerance limits, and subsequently the slice limit for two series of a denomination of note in circulation at one time.

**Practical limitations:**

The calculations defined so far may be used to run simulations of expected results or to analyse weights obtained from note sample, but where continuous adjustment is to be made to the weighing device as it is being used, much of the required data will not be known. In the case of $k_1$ and $k_2$, the ratio of old series notes to new series notes in circulation will not be known to the weighing device and cannot be determined from recorded data - the individual tolerances of the two series of notes may overlap, making it impossible to determine from which series some individual notes have come from based on their weight. The standard deviation, $\sigma_1$, and the mean value, $\mu_1$, of the old series of notes may be estimated from historical data if it has been recorded, but standard deviation, $\sigma_2$, and the mean value, $\mu_2$, of the new series of notes may never be determined as they will be mixed with old series notes when they are first presented to the weighing device.

Consideration must be given to what information is available to the weighing device and how it can be used to determine the changes that should be made to the slice limit. Historical data is information that may be available if internal storage (non-volatile memory) is used to record any measurements that are made. For each measurement that is made, it will be possible to record the average weight of a note within the measured sample and the number of notes that were measured in that sample.

The important piece of information that is required is the standard deviation of the notes that are currently in circulation, or a close estimate. It is already possible to continuously update the expected weight of a single banknote using the note weight learning algorithm, which could use a running average of the last $N$ measurements:

$$\mu = \frac{1}{N} \sum_{i=1}^{N} W_i$$

where:

$\mu$ = the current (calculated) expected note weight (running average)
$W_i$ = note weights obtained from previous measurements
$N$ = the number of previous measurements over which the average is calculated
$i$ = index of previous measurements

Using a similar process, it will be possible to determine a continuously updated estimate of the current standard deviation. The ideal information for calculating standard deviation is the weight of each individual note and the total number of notes weighed, according to the standard deviation formula:

$$\sigma = \sqrt{\frac{1}{N} \sum_{i=1}^{N} (x_i - \mu)^2}$$

where:

$\sigma$ = standard deviation
$x_i$ = individual note weights
$N$ = the number of individual notes
$i$ = index of individual notes
$\mu$ = the current expected note weight

However, the weight of each individual note ($x_i$) is not known from the historical measurement data. The weights obtained from previous measurements ($W_i$), that are used to calculate the average note weight are in fact themselves averages over the number of notes weighted for each measurement. This does not matter too much when calculating an overall average - the only effect this will have is measurements that were made with a smaller number of notes will contribute more to the calculation than measurements that were made with a larger number of notes. It would be possible to obtain an exact average by applying a weighting to each previous measurement according to the number of notes counted for that measurement, but this is an unnecessary complication and would make very little difference to the result. When calculating the standard deviation it is more significant that each measurement is an average - the standard deviation calculation depends upon the differences between each individual note weight and the average contributing to the final result. As only an average is known for each measurement that will consist of a number of notes, loss of fidelity can be expected when calculating the standard deviation by applying the note weights from previous measurements to the standard deviation formula:

$$\sigma_W = \sqrt{\frac{1}{N} \sum_{i=1}^{N} (W_i - \mu)^2}$$

where:

$\sigma_W$ = standard deviation based on previous measurements
$W_i$ = note weights obtained from previous measurements
$N$ = the number of previous measurements
$i$ = index of previous measurements
$\mu$ = the current expected note weight

**Simulation:**

In order to observe the effect of calculating a standard deviation based on counting by weight measurements ($\sigma_W$), a simulation can be set up to compare this standard deviation with the actual standard deviation (a). A simulation is prepared with inputs for mean weight and standard deviation of two series of notes and a starting slice limit. A table is set up, providing space for 100 simulated measurements - this equivalent to measuring 100 slices of a denomination of notes. For each simulated measurement, a random number of notes (up to the slice limit) are used, and a probability (between 0 and 1) of each note within the measurement being an old series note is entered. A Monte Carlo data set is added to the table with provision for up to 50 notes per measurement (a slice limit of more than 50 would never be used)

- this data is calculated to have the following properties:

• Data for each measurement is only populated up to the row corresponding to the number of notes used for the measurement.

• A random number between 0 and 1 is used to determine if each note will be from the old or new series - if the random number is below the probability of an old note for the measurement the calculation is performed based on the mean and standard deviation for old notes, otherwise the mean and standard deviation for new notes is used.

• Each data point will be calculated using the formula for Gaussian distributed data points for Monte Carlo simulations.

The following data is calculated from previous measurements:

• Learned note weight - for the first measurement, the mean weight for old series notes is used, thereafter a running average of the last 10 measured note weights.

• $\sigma$ (from last 10 measurements) - the actual standard deviation from the last 10 measurements, using individual note data from the Monte Carlo data set.

• $\sigma_W$ (from last 10 measurements) - the standard deviation based on the available information from the last 10 measurements (initially = 0).

The following data is calculated from current measurements:

• Total weight for current measurement

• Calculated number of notes (using total weight and learned note weight). This is calculated only by dividing total weight by note weight and rounding up or down (actual calculation provides the integer part of total weight ÷ note weight +0.5).

• Calculated note weight for this measurement. This is the total weight on the scale divided by the calculated number of notes.

For each measurement, the error is calculated - the difference between the actual number of notes applied to the simulation and the calculated number of notes. The frequency of these errors will be affected by the mean and standard distribution of the two series of notes: if the mean values are close together and the standard deviation is very small, the simulation could be run thousands of times without seeing an error but if the mean values are very far apart or the standard deviations indicate a wide tolerance, errors will be inevitable on almost every run of the simulation. Properties of mean and standard deviation should be used in the simulation that are realistic, i.e. likely to resemble a real situation, and not so severe as to eliminate any chance of improving the measurement accuracy.

For the purpose of the simulation, the note properties are chosen to be:

| | |
|---|---|
| Old Series Notes Mean weight | 1.00 |
| Old Series Notes Standard deviation | 0.02 |
| New Series Notes Mean weight | 1.10 |
| New Series Notes Standard deviation | 0.02 |

These values represent a new series note being produced with a 10% increase in weight. Both old and new series have a tolerance of about $\pm$ 0.06g. The starting slice limit is 25 and this is currently fixed over the entire range of the simulation. The probability of old series note is set to 1 for the first 10 measurements, then reducing by 0.01 on each measurement until a value of 0.5 is reached which is held for the rest of the simulation. This may be similar to the effect when a new series of banknotes is introduced - initially it is quite rare to come across them, but as time passes they become more common.

When the simulation is run several times, it can be seen that almost every time there are some errors. In occasional cases, a few errors close together cause the learned note weight to be calculated inaccurately - this can increase the risk of future errors.

The values of $\sigma$ and $\sigma_W$ can be plotted on a chart to see how they have responded to the random nature of the Mote Carlo analysis as shown on Figure 7. The calculation of $\sigma$ starts very close to the actual value of standard deviation (0.02). As the new series notes begin to take part in the simulation, the calculated value of $\sigma$ increases to about 0.054. This matches the expected value obtained from the formula for standard deviation of two non-overlapping sub-populations:

$$\sigma = \sqrt{k_1 \cdot \sigma_1^2 + k_2 \cdot \sigma_2^2 + k_1 \cdot k_2 \cdot (\mu_1 - \mu_2)^2} = 0.0539$$

The calculation of $\sigma_W$ starts at 0 (this is unavoidable as there is no previous data to base the calculation upon). It can be seen that $\sigma_W$ closely follows the shape of and $\sigma$, albeit plotted on a vertical axis scaled down by a factor of 0.1. The calculation of oW can be seen to change more erratically than the calculation of $\sigma$.

Using different profiles for the probability of old notes and running the simulation several times, a similar result is observed each time - the calculated value of $\sigma$ closely follows the expected value, the calculated value of $\sigma_W$ does likewise, but more erratically and reduced by a factor of 0.1. It may also be observed that if the slice limit is changed, this factor will also change, e.g. for a slice limit of 10 the factor becomes approximately 0.15 and for a slice limit of 1 the factor becomes 0.3.

A modification is now made to the simulation to allow the slice limit to be modified according to the calculated value of $\sigma_W$. For each measurement the slice limit is calculated, and a check box is added to determine if this calculated slice limit is used or the starting slice limit is used across the entire simulation.

The slice limit adjustment calculation should have the following properties:

- Use the original slice limit as starting value.

- Reduce the slice limit based upon the ratio of $\sigma_W$ from previous measurements to the current learned note weight.

- The sensitivity to the ratio of $\sigma_W$ from previous measurements to the current learned note weight should be adjustable by a factor.

- The calculated slice limit must never be zero or negative.

The last of these requirements implies that a negative exponential function should be used to calculate the slice limit adjustment, in order to prevent reaching zero. The factor used to adjust the sensitivity will determine the original rate. This provides the formula for automatically reducing the slice limit:

$$SL_n = INT\left( SL_o \cdot e^{-k \cdot \frac{\sigma_W}{\mu}} \right)$$

where:

$SL_n$ = the calculated new slice limit
$SL_o$ = the default slice limit
$\sigma_W$ = standard deviation based on previous measurements
$\mu$ = the current expected note weight
$k$ = sensitivity factor

As this is a negative exponential function, the part inside the brackets may fall below 1 which, when the integer is taken gives a result of zero (it is expected that the value of k that is selected would reduce the probability of this happening, but for the purpose of the model it is possible for this to happen). It will also be the case that the exponential nature of this function will prevent the original value of $SL_o$ ever being reached after values of $\sigma_W$ become active. For these reasons, an offset of +1 should be added to the formula:

$$SL_n = 1 + INT\left( SL_o \cdot e^{-k \cdot \frac{\sigma_W}{\mu}} \right)$$

The effect of this on the simulation is that the second measurement always has a slice limit of $SL_o$+1, but this will only ever happen one time while the counting by weight equipment is being used, and could be compensated for, as the algorithm is refined.

**Simulation results:**

Results from the simulation can be observed by producing a chart showing the change in slice limit and the errors over the range of measurements. Initially, the simulation is run with the automatic slice limit adjustment turned off. This simulation was run 20 times and the total errors from each run summed to give a grand total of 56. A typical chart of the slice limit and errors from these simulations is shown in Figure 8. This shows the slice limit remaining at the starting value of 25 throughout the simulation and 4 errors occurring.

After turning on the automatic slice limit calculation, a sensitivity factor of k = 50 was selected, based upon observations of the relation between σ and oW.

The simulation was then run with automatic slice limit adjustment turned on 20 times and the total errors from each run summed to give a grand total of 26. A typical chart of the slice limit and errors from these simulations is shown in Figure 9. This shows the slice limit reacting to changes in standard deviation over the range of the simulation and 2 errors occurring.

**Conclusion:**

The results have shown that using an estimate of the standard deviation based on recent measurements, it is possible to make adjustments to the slice limit reducing the number of errors. These simulations do not use tapered weight acceptance bands, which would decrease or eliminate the remaining errors, and the note weight learning algorithm is a simple running average. Integration of automatic slice limit adjustment with currently used methods for reducing the probability of error would provide a satisfactory improvement to the performance of counting by weight cash counting devices when a weight variation is caused by differing note issues in legal circulation or circulated notes physical condition causes variance between notes.

The limitation of this method is that it is a learning algorithm and as such will only perform when changes are made gradually. This is usually the case as new banknotes come into circulation; they generally appear with a gradually increasing frequency. An example of a condition where this method would fail to react would be: a current learned note weight is 1.00g; a new series of notes is released with a weight of 1.05g; a slice of 20 new notes is immediately applied to the counting by weight device. In this situation the applied weight is 21.00g and the counting by weight device will count this as 21 notes. The reason is the device has not had a chance to learn a new mean weight and standard deviation. This situation however is unrealistic and is only likely to occur if forced.

By mathematically modeling this process, it is possible to simulate unrealistic values. It is important when investigating the selection of the sensitivity constant that realistic values are considered, as would be the case when initially determining a slice limit - the result is then more likely to result in a constant that may be used universally for this method.

**Automatic Slice Limit Adjustment Method (100):**

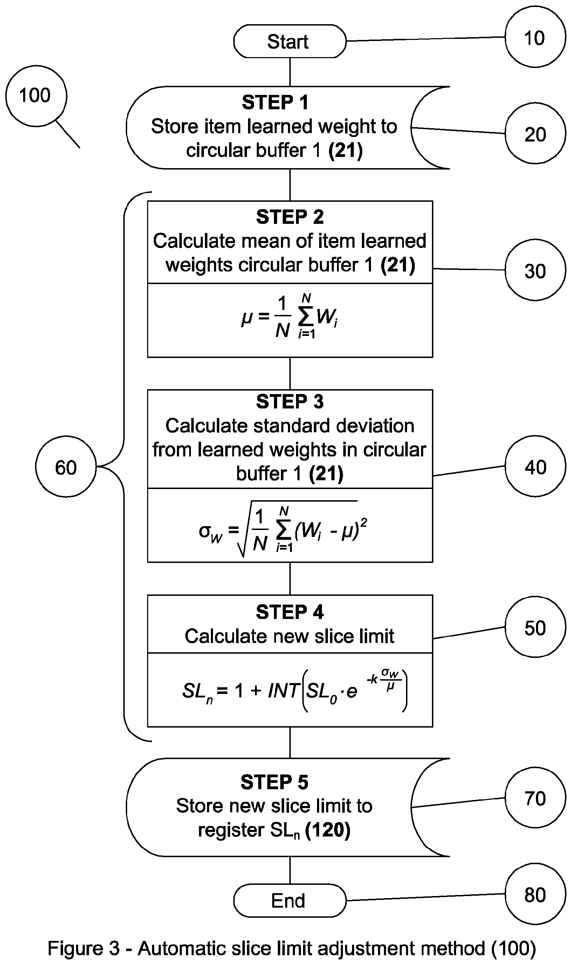

Attention is now drawn to Figure 3, showing one embodiment of an automatic slice limit adjustment method (100) according to the present invention and Figure 2, showing one embodiment of a counting by weight cash counting process including an automatic slice adjustment method (100) according to the present invention.

The start (10) of the automatic slice limit adjustment method (100) is triggered by the counting by weight cash counting process (200) if item weight learning and automatic slice limit adjustment are enabled and a counting by weight cash counting operation is being undertaken.

Once the automatic slice limit adjustment method (100) has been triggered (10) step 1 (20) of the method is to store the learned weight of the items being counted to circular buffer 1 (21). If circular buffer 1 (21) is full the learned weight of the items being counted over-writes the oldest record in the circular buffer 1 (21). If the circular buffer 1 (21) is not full the learned weight of the item being counted is stored in the next empty storage position in circular buffer 1 (21).

Once the learned weight of the items being counted has been stored in circular buffer 1 (21) the automatic slice limit determination algorithm (60), comprising three calculation steps:

STEP 2 - Calculation of mean of item learned weights in circular buffer 1 (21) - (30)
STEP 3 - Calculation of standard deviation from learned weights - (40)
STEP 4 - Calculation of new slice limit - (50), is triggered.

STEP 2 (30) - Calculation of mean of item learned weights in circular buffer 1 (21) is conducted using the formula:

$$\mu = \frac{1}{N} \sum_{i=1}^{N} W_i$$

where:

$\mu$ = the current (calculated) expected note weight (mean of item learned weights in circular buffer 1 (21))
$W_i$ = note weights obtained from previous measurements (item learned weights in circular buffer 1 (21))
$N$ = the number of previous measurements over which the average is calculated (number of records in circular buffer 1 (21))
$i$ = index of previous measurements

STEP 3 (40) - Calculation of standard deviation from learned weights is conducted using the formula:

$$\sigma_W = \sqrt{\frac{1}{N} \sum_{i=1}^{N} (W_i - \mu)^2}$$

where:

$\sigma_W$ = the current (calculated) standard deviation based on item learned weights in circular buffer 1 (21)
$W_i$ = note weights obtained from previous measurements (item learned weights in circular buffer 1 (21))
$N$ = the number of previous measurements (number of records in circular buffer 1 (21))
$i$ = index of previous measurements

$\mu$ = the current expected note weight (the result from Calculation at step 2))

STEP 4 (50) - Calculation of new slice limit is conducted using the formula:

$$SL_n = 1 + INT\left( SL_o \cdot e^{-k \cdot \frac{\sigma_W}{\mu}} \right)$$

where:

$SL_n$ = the calculated new slice limit
$SL_o$ = the default slice limit (from register $SL_o$ (110))
$\sigma_W$ = the current standard deviation (the result from Calculation at step 3))
$\mu$ = the current expected note weight (the result from Calculation at step 2))
$k$ = sensitivity factor

Once the automatic slice limit determination algorithm (60) is complete in step 5 (70) the calculated new slice limit ($SL_n$) is stored in register $SL_n$ (120) for use by the counting by weight process (200) when next initiated for the same currency and denomination.

The automatic slice limit adjustment method (100) then exits (80) and returns control back to the counting by weight cash counting process (200).

An automatic slice limit adjustment method (100) is disclosed. An automatic slice limit adjustment method (100) is an integral part of a counting by weight cash counting process (200). The automatic slice limit adjustment method (100) comprises five steps (20, 30, 40, 50 & 70):

Step 1 (20) - Store item weight from the currently running counting by weight cash counting process (200) in circular buffer 1 (21).
Step 2 (30) - Calculate mean of item weights in circular buffer 1 (21).
Step 3 (40) - Calculate standard deviation based on weights in circular buffer 1 (21).
Step 4 (50) - Calculate new slice limit.
Step 5 (70) - Store new slice limit in register $SL_n$ (120).

The calculation steps; Step 2, Step 3 & Step 4 comprise the automatic slice limit determination algorithm (60).
In Step 5 (70) the calculated new slice limit is stored in register $SL_n$ (120) for access by the counting by weight cash counting process (200) when next initiated for the same currency and denomination.

## Claims

1. A method of adjusting the slice limit of a counting by weight counting system (100), the method comprising the steps of:

providing said system with one or more properties of an item to be counted;
adding one or more of said items to said counting by weight counting system;
measuring the weight of the total number of said items added to said counting by weight counting system;
determining the total number of said items added to said counting by weight counting system, said determination being based on at least one predetermined weight of one of said items;
determining the average weight of said items added to said counting by weight counting system;
determining the mean value of said at least one predetermined weight of one of said items and said average weight of said items added to said counting by weight counting system (30);
determining the standard deviation of said at least one predetermined weight of one of said items and said average weight of said items added to said counting by weight counting system (40); and
determining a new slice limit of the counting by weight counting system (50), said determination being based on the mean value of said at least one predetermined weight of one of said items and said average weight of said items added to said counting by weight counting system, the standard deviation of said at least one predetermined weight of one of said items and said average weight of said items added to said counting by weight counting system, and a sensitivity factor, the sensitivity factor being based upon the relationship between the determined standard deviation of said at least one predetermined weight of one of said items and said average weight of said items added to said counting by weight counting system and simulated standard deviations of predetermined weights and average weights of items added to simulated counting by weight counting systems.

2. The method of claim 1, wherein the determination of the total number of said items added to said counting by weight counting system is based on an average predetermined weight of one of said items.

3. The method of claim 1 or claim 2, wherein the determination of the total number of said items added to said counting by weight counting system is based on a plurality of predetermined weights of one of said items.

4. The method of claim 3, wherein the plurality of predetermined weights of one of said items is an average of a plurality of predetermined weights of one of said items.

5. The method of claim 3 or claim 4, wherein the method comprises the additional step of adding the determined average weight of said items added to said counting by weight counting system to the plurality of predetermined weights of one of said items.

6. The method of any preceding claim, wherein the step of determining the mean value of said at least one predetermined weight of one of said items and said average weight of said items added to said counting by weight counting system (30) uses the formula:

$$\mu = \frac{1}{N} \sum_{i=1}^{N} W_i$$

where:

$\mu$ = the average weight of said items added to the counting by weight counting system;
$W_i$ = the at least one predetermined weight of one of said items;
$N$ = the number of predetermined weights of one of said items; and
$i$ = index of previous measurements.

7. The method of any preceding claim, wherein the step of determining the standard deviation of said at least one predetermined weight of one of said items and said average weight of said items added to said counting by weight counting system (40) uses the formula:

$$\sigma_W = \sqrt{\frac{1}{N} \sum_{i=1}^{N} (W_i - \mu)^2}$$

where:

$\sigma_W$ = the standard deviation of said at least one predetermined weight of one of said items and said average weight of said items added to said counting by weight counting system;
$W_i$ = the at least one predetermined weight of one of said items;
$N$ = the number of predetermined weights of one of said items;
$i$ = index of previous measurements; and
$\mu$ = the average weight of said items added to the counting by weight counting system.

8. The method of any preceding claim, wherein the step of determining the new slice limit of the counting by weight counting system (50) uses the formula:

$$SL_n = 1 + INT\left(SL_o \cdot e^{-k \cdot \frac{\sigma_W}{\mu}}\right)$$

where:

$SL_n$ = the determined new slice limit;
$SL_o$ = the current slice limit;
$\sigma_W$ = the standard deviation of said at least one predetermined weight of one of said items and said average weight of said items added to said counting by weight counting system (the current standard deviation);
$\mu$ = the average weight of said items added to the counting by weight counting system; and
$k$ = sensitivity factor.

9. The method of any preceding claim, wherein the counting by weight counting system is configured to operate with a plurality of different items.

10. The method of any preceding claim, wherein the determined weights, mean weights, standard deviations of mean weights and slice limits are stored for each type of item counted by the counting by weight counting system.

11. The method of any preceding claim, wherein the counting by weight counting system is a cash counting system and the plurality of different items are different denominations of bank notes and/or bank coins.

12. The method of any preceding claim, wherein the method comprises the additional step of removing one or more items from the counting by weight counting system before the total number of said items is determined if the total measured weight of the items exceeds the current slice limit.

13. The method of any preceding claim, wherein the method comprises the additional step of removing one or more items from the counting by weight counting system before the total number of said items is determined if the total measured weight is out with a predetermined tolerance band for the determined total number of items.

14. A counting by weight counting apparatus comprising:

a property input module capable of providing said apparatus with one or more properties of an item to be counted;
a weight measuring module capable of measuring the weight of a total number of said items added to said counting by weight counting apparatus;
a total item number determination module capable of determining the total number of said items added to said counting by weight counting apparatus, said determination being based on at least one predetermined weight of one of said items;
an average weight determination module capable of determining the average weight of said items added to said counting by weight counting apparatus;
a mean value determination module capable of determining the mean value of said at least one predetermined weight of one of said items and said average weight of said items added to said counting by weight counting apparatus;
a standard deviation module capable of determining the standard deviation of said at least one predetermined weight of one of said items and said average weight of said items added to said counting by weight counting apparatus; and
a slice limit determination module capable of determining a new slice limit of the counting by weight counting apparatus, said determination being based on the mean value of said at least one predetermined weight of one of said items and said average weight of said items added to said counting by weight counting apparatus, the standard deviation of said at least one predetermined weight of one of said items and said average weight of said items added to said counting by weight counting apparatus, and a sensitivity factor, the sensitivity factor being based upon the relationship between the determined standard deviation of said at least one predetermined weight of one of said items and said average weight of said items added to said counting by weight counting system and simulated standard deviations of predetermined weights and average weights of items added to simulated counting by weight counting systems.

**15.** A computer program product encoded with instructions that when run on a computer of a counting by weight counting apparatus, cause the counting by weight counting apparatus to receive input data and information and perform a method of adjusting the slice limit thereof, the method comprising the steps of:

providing said apparatus with one or more properties of an item to be counted;

measuring the weight of the total number of said items added to said counting by weight counting system;

determining the total number of said items added to said counting by weight counting system, said determination being based on at least one predetermined weight of one of said items;

determining the average weight of said items added to said counting by weight counting system;

determining the mean value of said at least one predetermined weight of one of said items and said average weight of said items added to said counting by weight counting system;

determining the standard deviation of said at least one predetermined weight of one of said items and said average weight of said items added to said counting by weight counting system; and

determining a new slice limit of the counting by weight counting system, said determination being based on the mean value of said at least one predetermined weight of one of said items and said average weight of said items added to said counting by weight counting system, the standard deviation of said at least one predetermined weight of one of said items and said average weight of said items added to said counting by weight counting system, and a sensitivity factor, the sensitivity factor being based upon the relationship between the determined standard deviation of said at least one predetermined weight of one of said items and said average weight of said items added to said counting by weight counting system and simulated standard deviations of predetermined weights and average weights of items added to simulated counting by weight counting systems.

## Patentansprüche

**1.** Verfahren zum Einstellen der Scheibengrenze eines Zählen-nach-Gewicht-Zählsystems (100), wobei das Verfahren die folgenden Schritte umfasst:

Versehen des Systems mit einer oder mehreren Eigenschaften eines zu zählenden Artikels;

Hinzufügen eines oder mehrerer der Artikel zu dem Zählen-nach-Gewicht-Zählsystem;

Messen des Gewichts der Gesamtzahl der Artikel, die zu dem Zählen-nach-Gewicht-Zählsystem hinzugefügt werden;

Bestimmen der Gesamtzahl der Artikel, die zu dem Zählen-nach-Gewicht-Zählsystem hinzugefügt werden, wobei das Bestimmen auf mindestens einem vorbestimmten Gewicht eines der Artikel basiert;

Bestimmen des Durchschnittsgewichts der Artikel, die zu dem Zählen-nach-Gewicht-Zählsystem hinzugefügt werden;

Bestimmen des Mittelwerts des mindestens einen vorbestimmten Gewichts eines der Artikel und des Durchschnittsgewichts der Artikel, die zu dem Zählen-nach-Gewicht-Zählsystem (30) hinzugefügt werden;

Bestimmen der Standardabweichung des mindestens einen vorbestimmten Gewichts eines der Artikel und des Durchschnittsgewichts der Artikel, die zu dem Zählen-nach-Gewicht-Zählsystem (40) hinzugefügt werden; und

Bestimmen einer neuen Scheibengrenze des Zählen-nach-Gewicht-Zählsystems (50), wobei das Bestimmen auf Folgendem basiert: dem Mittelwert des mindestens einen vorbestimmten Gewichts eines der Artikel und dem Durchschnittsgewicht der Artikel, die durch das Zählen-nach-Gewicht-Zählsystem hinzugefügt werden, der Standardabweichung des mindestens einen vorbestimmten Gewichts eines der Artikel und des Durchschnittsgewichts der Artikel, die zu dem Zählen-nach-Gewicht-Zählsystem hinzugefügt werden, und einem Empfindlichkeitsfaktor, wobei der Empfindlichkeitsfaktor auf Folgendem basiert: der Beziehung zwischen der bestimmten Standardabweichung von dem mindestens einen vorbestimmten Gewicht eines der Artikel und dem Durchschnittsgewicht der Artikel, die zu dem Zählen-nach-Gewicht-Zählsystem hinzugefügt werden, und simulierten Standardabweichungen von vorbestimmten Gewichten und Durchschnittsgewichten von Artikeln, die zu den simulierten Zählen-nach-Gewicht-Zählsystemen hinzugefügt werden.

**2.** Verfahren nach Anspruch 1, wobei das Bestimmen der Gesamtzahl der Artikel, die zu dem Zählen-nach-Gewicht-Zählsystem hinzugefügt werden, auf einem durchschnittlichen vorbestimmten Gewicht eines der Artikel basiert.

**3.** Verfahren nach Anspruch 1 oder Anspruch 2, wobei das Bestimmen der Gesamtzahl der Artikel, die zu dem Zählen-nach-Gewicht-Zählsystem hinzugefügt werden, auf einer Vielzahl von vorbestimmten Gewichten eines der Artikel basiert.

4. Verfahren nach Anspruch 3, wobei die Vielzahl von vorbestimmten Gewichten eines der Artikel ein Durchschnitt einer Vielzahl von vorbestimmten Gewichten eines der Artikel ist.

5. Verfahren nach Anspruch 3 oder Anspruch 4, wobei das Verfahren den zusätzlichen Schritt des Hinzufügens des bestimmten Durchschnittsgewichts der Artikel, die zu dem Zählen-nach-Gewicht-Zählsystem hinzugefügt werden, zu der Vielzahl von vorbestimmten Gewichten eines der Artikel umfasst.

6. Verfahren nach einem der vorhergehenden Ansprüche, wobei der Schritt des Bestimmens des Mittelwerts des mindestens einen vorbestimmten Gewichts eines der Artikel und des Durchschnittsgewichts der Artikel, die zu dem Zählen-nach-Gewicht-Zählsystem (30) hinzugefügt werden, die folgende Formel verwendet:

$$\mu = \frac{1}{N} \sum_{i=1}^{N} W_i$$

wobei:

$\mu$ = das Durchschnittsgewicht der Artikel, die zu dem Zählen-nach-Gewicht-Zählsystem hinzugefügt werden;
$W_i$ = das mindestens eine vorbestimmte Gewicht eines der Artikel;
$N$ = die Anzahl von vorbestimmten Gewichten eines der Artikel; und
i = der Index der vorherigen Messungen.

7. Verfahren nach einem der vorhergehenden Ansprüche, wobei der Schritt des Bestimmens der Standardabweichung des mindestens einen vorbestimmten Gewichts eines der Artikel und des Durchschnittsgewichts der Artikel, die zu dem Zählen-nach-Gewicht-Zählsystem (40) hinzugefügt werden, die folgende Formel verwendet:

$$\sigma_w = \sqrt{\frac{1}{N} \sum_{i=1}^{N} (W_i - \mu)^2}$$

wobei:

$\sigma_w$ = die Standardabweichung des mindestens einen vorbestimmten Gewichts eines der Artikel und des Durchschnittsgewichts der Artikel, die zu dem Zählen-nach-Gewicht-Zählsystem hinzugefügt werden;
$W_i$ = das mindestens eine vorbestimmte Gewicht eines der Artikel;
$N$ = die Anzahl von vorbestimmten Gewichten eines der Artikel;
i = der Index der vorherigen Messungen; und
$\mu$ = das Durchschnittsgewicht der Artikel, die zu dem Zählen-nach-Gewicht-Zählsystem hinzugefügt werden.

8. Verfahren nach einem der vorhergehenden Ansprüche, wobei der Schritt des Bestimmens der neuen Scheibengrenze des Zählen-nach-Gewicht-Zählsystems (50) die folgende Formel verwendet:

$$SL_n = 1 + INT\left( SL_o \cdot e^{-k \cdot \frac{\sigma_w}{\mu}} \right)$$

wobei:

$SL_n$ = die bestimmte neue Scheibengrenze;
$SL_o$ = die aktuelle Scheibengrenze;
$\sigma_w$ = die Standardabweichung des mindestens einen vorbestimmten Gewichts eines der Artikel und des Durchschnittsgewichts der Artikel, die zu dem Zählen-nach-Gewicht-Zählsystem hinzugefügt werden (die aktuelle Standardabweichung);
$\mu$ = das Durchschnittsgewicht der Artikel, die durch das Zählen-nach-Gewicht-Zählsystem hinzugefügt werden; und
k = der Empfindlichkeitsfaktor.

9. Verfahren nach einem der vorhergehenden Ansprüche, wobei das Zählen-nach-Gewicht-Zählsystem so konfiguriert ist, dass es mit einer Vielzahl von verschiedenen Artikeln funktioniert.

10. Verfahren nach einem der vorhergehenden Ansprüche, wobei die bestimmten Gewichte, die mittleren Gewichte, die Standardabweichungen der mittleren Gewichte und die Scheibengrenzen für jede Art von Artikel, der durch das Zählen-nach-Gewicht-Zählsystem gezählt wird, gespeichert werden.

11. Verfahren nach einem der vorangehenden Ansprüche, wobei das Zählen-nach-Gewicht-Zählsystem ein Bargeldzählsystem ist und die Vielzahl von unterschiedlichen Artikeln unterschiedliche Nennwerte von Banknoten und/oder Bankmünzen sind.

12. Verfahren nach einem der vorhergehenden Ansprüche, wobei das Verfahren den zusätzlichen Schritt des Entfernens von einem oder mehreren Artikeln aus dem Zählen-nach-Gewicht-Zählsystem umfasst, bevor die Gesamtzahl der Artikel bestimmt wird, wenn das gesamte gemessene Gewicht der Artikel die aktuelle Scheibengrenze übersteigt.

13. Verfahren nach einem der vorhergehenden Ansprüche, wobei das Verfahren den zusätzlichen Schritt des Entfernens eines oder mehrerer Artikel aus dem Zählen-nach-Gewicht-Zählsystem umfasst, bevor die Gesamtzahl der Artikel bestimmt wird, wenn das gesamte gemessene Gewicht außerhalb eines vorbestimmten Toleranzbands für die bestimmte Gesamtzahl der Artikel fällt.

14. Zählen-nach-Gewicht-Zählvorrichtung, die Folgendes umfasst:

ein Eigenschaftseingabemodul, das die Vorrichtung mit einer oder mehreren Eigenschaften eines zu zählenden Artikels versehen kann;

ein Gewichtsmessmodul, das das Gewicht einer Gesamtzahl der Artikel, die zu der Zählen-nach-Gewicht-Zählvorrichtung hinzugefügt werden, messen kann;

ein Gesamtartikelnummer-Bestimmungsmodul, das die Gesamtzahl der Artikel, die zu der Zählen-nach-Gewicht-Zählvorrichtung hinzugefügt werden, bestimmen kann, wobei das Bestimmen auf mindestens einem vorbestimmten Gewicht eines der Artikel basiert;

ein Durchschnittsgewicht-Bestimmungsmodul, das das Durchschnittsgewicht der Artikel, die zu der Zählen-nach-Gewicht-Zählvorrichtung hinzugefügt werden, bestimmen kann;

ein Mittelwert-Bestimmungsmodul, das den Mittelwert des mindestens einen vorbestimmten Gewichts eines der Artikel und das Durchschnittsgewicht der Artikel, die zu der Zählen-nach-Gewicht-Zählvorrichtung hinzugefügt werden, bestimmen kann;

ein Standardabweichungsmodul, das die Standardabweichung des mindestens einen vorbestimmten Gewichts eines der Artikel und das Durchschnittsgewicht der Artikel, die zu der Zählen-nach-Gewicht-Zählvorrichtung hinzugefügt werden, bestimmen kann; und

ein Scheibenbegrenzungs-Bestimmungsmodul, das eine neue Scheibengrenze der Zählen-nach-Gewicht-Zählvorrichtung bestimmen kann, wobei das Bestimmen auf Folgendem basiert: dem Mittelwert des mindestens einen vorbestimmten Gewichts eines der Artikel und dem Durchschnittsgewichts der Artikel, die zu der Zählen-nach-Gewicht-Zählvorrichtung hinzugefügt werden, der Standardabweichung des mindestens einen vorbestimmten Gewichts eines der Artikel und dem Durchschnittsgewicht der Artikel, die zu der Zählen-nach-Gewicht-Zählvorrichtung hinzugefügt werden, und einem Empfindlichkeitsfaktor, wobei der Empfindlichkeitsfaktor auf Folgendem basiert: der Beziehung zwischen der bestimmten Standardabweichung des mindestens einen vorbestimmten Gewichts eines der Artikel und dem Durchschnittsgewicht der Artikel, die dem Zählen-nach-Gewicht-Zählsystem hinzugefügt werden, und simulierten Standardabweichungen von vorbestimmten Gewichten und Durchschnittsgewichten von Artikeln, die zu simulierten Zählen-nach-Gewicht-Zählsystemen hinzugefügt werden.

15. Computerprogrammprodukt, das mit Befehlen codiert ist, die, wenn sie auf einem Computer einer Zählen-nach-Gewicht-Zählvorrichtung ausgeführt werden, die Zählen-nach-Gewicht-Zählvorrichtung dazu veranlassen, Eingangsdaten und Informationen zu empfangen und ein Verfahren zum Einstellen ihrer Scheibengrenze durchzuführen, wobei das Verfahren die folgenden Schritte umfasst:

Versehen der Vorrichtung mit einer oder mehreren Eigenschaften eines zu zählenden Artikels;
Messen des Gewichts der Gesamtzahl der Artikel, die zu dem Zählen-nach-Gewicht-Zählsystem hinzugefügt werden;
Bestimmen der Gesamtzahl der Artikel, die zu dem Zählen-nach-Gewicht-Zählsystem hinzugefügt werden, wobei das Bestimmen auf mindestens einem vorbestimmten Gewicht eines der Artikel basiert;

Bestimmen des Durchschnittsgewichts der Artikel, die zu dem Zählen-nach-Gewicht-Zählsystem hinzugefügt werden;

Bestimmen des Mittelwerts des mindestens einen vorbestimmten Gewichts eines der Artikel und des Durchschnittsgewichts der Artikel, die zu dem Zählen-nach-Gewicht-Zählsystem hinzugefügt werden;

Bestimmen der Standardabweichung des mindestens einen vorbestimmten Gewichts eines der Artikel und des Durchschnittsgewichts der Artikel, die dem Zählen-nach-Gewicht-Zählsystem hinzugefügt werden; und

Bestimmen einer neuen Scheibengrenze des Zählen-nach-Gewicht-Zählsystems, wobei das Bestimmen auf Folgendem basiert: dem Mittelwert des mindestens einen vorbestimmten Gewichts eines der Artikel und des Durchschnittsgewichts der Artikel, die zu dem Zählen-nach-Gewicht-Zählsystem hinzugefügt werden, der Standardabweichung des mindestens einen vorbestimmten Gewichts eines der Artikel und des Durchschnittsgewichts der Artikel, die dem Zählen-nach-Gewicht-Zählsystem hinzugefügt werden, und einem Empfindlichkeitsfaktor, wobei der Empfindlichkeitsfaktor auf Folgendem basiert: der Beziehung zwischen der bestimmten Standardabweichung des mindestens ein vorbestimmtes Gewicht eines der Artikel und des Durchschnittsgewichts der Artikel, die dem Zählen-nach-Gewicht-Zählsystem hinzugefügt werden, und simulierten Standardabweichungen von vorbestimmten Gewichten und Durchschnittsgewichten von Artikeln, die dem simulierten Zählen-nach-Gewicht-Zählsystem hinzugefügt werden.

## Revendications

1. Un procédé de réglage de limite de la tranche d'un système de comptage par comptage selon le poids (100), le procédé comprenant les étapes consistant à :

fournir audit système une ou plusieurs propriétés d'un élément à compter ;

ajouter un ou plusieurs desdits éléments audit système de comptage par comptage selon le poids ;

mesurer le poids du nombre total desdits éléments ajoutés audit système de comptage par comptage selon le poids ;

déterminer le nombre total desdits éléments ajoutés audit système de comptage par comptage selon le poids, ladite détermination étant basée sur au moins un poids prédéterminé de l'un desdits éléments ;

déterminer le poids moyen desdits éléments ajoutés audit système de comptage par comptage selon le poids ;

déterminer la valeur moyenne dudit au moins un poids prédéterminé de l'un desdits éléments et dudit poids moyen desdits éléments ajoutés audit système de comptage par comptage selon le poids (30) ;

déterminer l'écart-type dudit au moins un poids prédéterminé de l'un desdits éléments et dudit poids moyen desdits éléments ajoutés audit système de comptage par comptage selon le poids (40) ; et

déterminer une nouvelle limite de tranche du système de comptage par comptage selon le poids (50), ladite détermination étant basée sur la valeur moyenne dudit au moins un poids prédéterminé de l'un desdits éléments et dudit poids moyen desdits éléments ajoutés audit système de comptage par comptage selon le poids, l'écart-type dudit au moins un poids prédéterminé de l'un desdits éléments et dudit poids moyen desdits éléments ajoutés audit système de comptage par comptage selon le poids, et un facteur de sensibilité, le facteur de sensibilité étant basé sur la relation entre l'écart-type déterminé dudit au moins un poids prédéterminé de l'un desdits éléments et dudit poids moyen desdits éléments ajoutés audit système de comptage par comptage selon le poids et des écarts-types simulés de poids prédéterminés et de poids moyens d'éléments ajoutés à des systèmes de comptage par comptage selon le poids simulés.

2. Le procédé de la revendication 1, dans lequel la détermination du nombre total desdits éléments ajoutés audit système de comptage par comptage selon le poids est basée sur un poids prédéterminé moyen de l'un desdits éléments.

3. Le procédé de la revendication 1 ou de la revendication 2, dans lequel la détermination du nombre total desdits éléments ajoutés audit système de comptage par comptage selon le poids est basée sur une pluralité de poids prédéterminés de l'un desdits éléments.

4. Le procédé de la revendication 3, dans lequel la pluralité de poids prédéterminés de l'un desdits éléments est une moyenne d'une pluralité de poids prédéterminés de l'un desdits éléments.

5. Le procédé de la revendication 3 ou de la revendication 4, dans lequel le procédé comprend l'étape supplémentaire consistant à ajouter le poids moyen déterminé desdits éléments ajoutés audit système de comptage par comptage selon le poids à la pluralité de poids prédéterminés de l'un desdits éléments.

**6.** Le procédé de n'importe quelle revendication précédente, dans lequel l'étape consistant à déterminer la valeur moyenne dudit au moins un poids prédéterminé de l'un desdits éléments et dudit poids moyen desdits éléments ajoutés audit système de comptage par comptage selon le poids (30) utilise la formule :

$$\mu = \frac{1}{N} \sum_{i=1}^{N} W_i$$

où :

$\mu$ = le poids moyen desdits éléments ajoutés au système de comptage par comptage selon le poids ;
$W_i$ = l'au moins un poids prédéterminé de l'un desdits éléments ;
$N$ = le nombre de poids prédéterminés de l'un desdits éléments ; et
$i$ = indice des mesures précédentes.

**7.** Le procédé de n'importe quelle revendication précédente, dans lequel l'étape consistant à déterminer l'écart-type dudit au moins un poids prédéterminé de l'un desdits éléments et dudit poids moyen desdits éléments ajoutés audit système de comptage par comptage selon le poids (40) utilise la formule :

$$\sigma_W = \sqrt{\frac{1}{N} \sum_{i=1}^{N} (W_i - \mu)^2}$$

où :

$\sigma_W$ = l'écart-type dudit au moins un poids prédéterminé de l'un desdits éléments et dudit poids moyen desdits éléments ajoutés audit système de comptage par comptage selon le poids ;
$W_i$ = l'au moins un poids prédéterminé de l'un desdits éléments ;
$N$ = le nombre de poids prédéterminés de l'un desdits éléments ;
$i$ = indice des mesures précédentes ; et
$\mu$ = le poids moyen desdits éléments ajoutés au système de comptage par comptage selon le poids.

**8.** Le procédé de n'importe quelle revendication précédente, dans lequel l'étape consistant à déterminer la nouvelle limite de tranche du système de comptage par comptage selon le poids (50) utilise la formule :

$$SL_n = 1 + INT\left(SL_o \cdot e^{-k\frac{\sigma_W}{\mu}}\right)$$

où :

$SL_n$ = la nouvelle limite de tranche déterminée ;
$SL_o$ = la limite de tranche actuelle ;
$\sigma_W$ = l'écart-type dudit au moins un poids prédéterminé de l'un desdits éléments et dudit poids moyen desdits éléments ajoutés audit système de comptage par comptage selon le poids (l'écart-type actuel) ;
$\mu$ = le poids moyen desdits éléments ajoutés au système de comptage par comptage selon le poids ; et
k = facteur de sensibilité.

**9.** Le procédé de n'importe quelle revendication précédente, dans lequel le système de comptage par comptage selon le poids est configuré pour fonctionner avec une pluralité d'éléments différents.

**10.** Le procédé de n'importe quelle revendication précédente, dans lequel les poids déterminés, les poids moyens, les écarts-types des poids moyens et les limites de tranche sont stockés pour chaque type d'élément compté par le système de comptage par comptage selon le poids.

**11.** Le procédé de n'importe quelle revendication précédente, dans lequel le système de comptage par comptage selon le poids est un système de comptage d'espèces et la pluralité d'éléments différents sont des dénominations différentes de billets de banque et/ou de pièces de monnaie de banque.

**12.** Le procédé de n'importe quelle revendication précédente, dans lequel le procédé comprend l'étape supplémentaire consistant à retirer un ou plusieurs éléments du système de comptage par comptage selon le poids avant que le nombre total desdits éléments ne soit déterminé si le poids total mesuré des éléments dépasse la limite de tranche actuelle.

**13.** Le procédé de n'importe quelle revendication précédente, dans lequel le procédé comprend l'étape supplémentaire consistant à retirer un ou plusieurs éléments du système de comptage par comptage selon le poids avant que le nombre total desdits éléments ne soit déterminé si le poids total mesuré est sorti avec une bande de tolérance prédéterminée pour le nombre total déterminé d'éléments.

**14.** Un appareil de comptage par comptage selon le poids comprenant :

un module d'entrée de propriété capable de fournir audit appareil une ou plusieurs propriétés d'un élément à compter ;
un module de mesure de poids capable de mesurer le poids d'un nombre total desdits éléments ajoutés audit appareil de comptage par comptage selon le poids ;
un module de détermination du nombre total d'éléments capable de déterminer le nombre total desdits éléments ajoutés audit appareil de comptage par comptage selon le poids, ladite détermination étant basée sur au moins un poids prédéterminé de l'un desdits éléments ;
un module de détermination du poids moyen capable de déterminer le poids moyen desdits éléments ajoutés audit appareil de comptage par comptage selon le poids ;
un module de détermination de la valeur moyenne capable de déterminer la valeur moyenne dudit au moins un poids prédéterminé de l'un desdits éléments et dudit poids moyen desdits éléments ajoutés audit appareil de comptage par comptage selon le poids ;
un module d'écart-type capable de déterminer l'écart-type dudit au moins un poids prédéterminé de l'un desdits éléments et dudit poids moyen desdits éléments ajoutés audit appareil de comptage par comptage selon le poids ; et
un module de détermination de limite de tranche capable de déterminer une nouvelle limite de tranche de l'appareil de comptage par comptage selon le poids, ladite détermination étant basée sur la valeur moyenne dudit au moins un poids prédéterminé de l'un desdits éléments et dudit poids moyen desdits éléments ajoutés audit appareil de comptage par comptage selon le poids, l'écart-type dudit au moins un poids prédéterminé de l'un desdits éléments et dudit poids moyen desdits éléments ajoutés audit appareil de comptage par comptage selon le poids, et un facteur de sensibilité, le facteur de sensibilité étant basé sur la relation entre l'écart-type déterminé dudit au moins un poids prédéterminé de l'un desdits éléments et dudit poids moyen desdits éléments ajoutés audit système de comptage par comptage selon le poids et des écarts-types simulés de poids prédéterminés et de poids moyens d'éléments ajoutés à des systèmes de comptage par comptage selon le poids simulés.

**15.** Un produit de programme informatique codé avec des instructions qui, lorsqu'elles sont exécutées sur un ordinateur d'un appareil de comptage par comptage selon le poids, amènent l'appareil de comptage par comptage selon le poids à recevoir des informations et des données d'entrée et à effectuer un procédé de réglage de la limite de tranche de celui-ci, le procédé comprenant les étapes consistant à :

fournir audit appareil une ou plusieurs propriétés d'un élément à compter ;
mesurer le poids du nombre total desdits éléments ajoutés audit système de comptage par comptage selon le poids ;
déterminer le nombre total desdits éléments ajoutés audit système de comptage par comptage selon le poids, ladite détermination étant basée sur au moins un poids prédéterminé de l'un desdits éléments ;
déterminer le poids moyen desdits éléments ajoutés audit système de comptage par comptage selon le poids ;
déterminer la valeur moyenne dudit au moins un poids prédéterminé de l'un desdits éléments et dudit poids moyen desdits éléments ajoutés audit système de comptage par comptage selon le poids ;
déterminer l'écart-type dudit au moins un poids prédéterminé de l'un desdits éléments et dudit poids moyen desdits éléments ajoutés audit système de comptage par comptage selon le poids ; et
déterminer une nouvelle limite de tranche du système de comptage par comptage selon le poids, ladite détermination étant basée sur la valeur moyenne dudit au moins un poids prédéterminé de l'un desdits éléments et dudit poids moyen desdits éléments ajoutés audit système de comptage par comptage selon le poids, l'écart-type dudit au moins un poids prédéterminé de l'un desdits éléments et dudit poids moyen desdits éléments ajoutés audit système de comptage par comptage selon le poids, et un facteur de sensibilité, le facteur de sensibilité étant basé sur la relation entre l'écart-type déterminé dudit au moins un poids prédéterminé de l'un desdits éléments et dudit poids moyen desdits éléments ajoutés audit système de comptage par comptage selon le poids et des écarts-types simulés de poids prédéterminés et de poids moyens d'éléments ajoutés à des systèmes de comptage par comptage selon le poids simulés.

Figure 1 - Counting by weight cash counting process for one denomination

Figure 2 - Modified counting by weight cash counting process (200) for one denomination including automatic slice limit adjustment method (100)

Start — 10

100

STEP 1
Store item learned weight to circular buffer 1 **(21)** — 20

STEP 2
Calculate mean of item learned weights circular buffer 1 **(21)** — 30

$$\mu = \frac{1}{N} \sum_{i=1}^{N} W_i$$

STEP 3
Calculate standard deviation from learned weights in circular buffer 1 **(21)** — 40

$$\sigma_W = \sqrt{\frac{1}{N} \sum_{i=1}^{N} (W_i - \mu)^2}$$

60

STEP 4
Calculate new slice limit — 50

$$SL_n = 1 + INT\left(SL_0 \cdot e^{-k\frac{\sigma_W}{\mu}}\right)$$

STEP 5
Store new slice limit to register $SL_n$ **(120)** — 70

End — 80

Figure 3 - Automatic slice limit adjustment method (100)

Figure 4 - Typical outputs from *P(x)*
and *x* [data set, 1000points] formulae

Figure 5 - Distribution of old and new series banknotes combined

Figure 6 - Equivalent Gaussuan distribution *P'(x)*

Figure 7 - Calculated values of σ and σw simulated with fixed slice limit

Figure 8 - Simulation results - automatic slice limit adjustment turned off

Figure 9 - Simulation results - automatic slice limit adjustment turned on

EP 3 058 322 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0091274 A2
- US 4629016 A